# EUROPEAN PATENT APPLICATION

(11) **EP 4 850 937 A1**
(43) Date of publication of application: **09.12.2026**
(21) Application number: 26181833.0
(22) Date of filing: 29.05.2026
(51) Int. Cl.: B60H 3/06, B60H 1/00

(54) **INSTALLATION OF AN AIR FILTER IN AN AIR CONDITIONING UNIT FOR A MOTOR VEHICLE**

(30) Priority: 04.06.2025 IT 202500012958
(71) Applicant: DENSO THERMAL SYSTEMS S.p.A., 10046 Poirino (Torino) (IT)
(72) Inventor: BALZO, Michele, I-10046 POIRINO (Torino) (IT)
(74) Representative: Vanzini, Christian

(57) **Abstract**

An air conditioning unit for a motor vehicle, comprising a casing (11) of the air conditioning unit, an air inlet (15), and a filter housing (18) formed in the casing (11) and arranged opposite the air inlet (15), the filter housing (18) comprising a substantially quadrangular filter seat (19), configured to receive an air filter (16, 16', 16"), wherein the filter housing (18) comprises a filter insertion part (20), which extends from the air inlet (15) towards the filter seat (19), the filter insertion part (20) comprising a pair of lateral guide elements (20', 20") defining a slot for insertion of the air filter (16, 16', 16") arranged opposite the air inlet (15).

## Description

The present invention generally relates to the installation of air filters in air conditioning units of motor vehicles.

An air conditioning system for vehicles usually comprises a casing forming a chamber generally articulated into a plurality of air passages and connected to an inlet duct in which a fan is mounted. A heater for heating the air flow, an evaporator for treating the air flow and an air filter are generally housed in the aforesaid chamber. The air filter is usually arranged downstream of an air inlet, with reference to the air flow direction.

In many cases, there is the problem of the limited space available for installing and/or replacing the air filter. The space available removing the filter is limited because a plurality of tubes connected to the heater and to the evaporator are generally arranged around the casing. Regardless of the arrangement of the tubes, the space around the casing of the air conditioning unit may be limited due to the presence of other components. To overcome the space limitations, it has been suggested to use air filters consisting of two separate sections arranged beside each other. An example is described in document EP 2072106 A1. In this known solution, the removal of a cover allows access to the filter housing.

EP 2251220 A2 describes an air conditioning unit for a motor vehicle, comprising
a casing of the air conditioning unit,
an air inlet formed in the front of said casing and configured for outside air to enter into the casing of the air conditioning unit, and
a filter housing formed in said casing and arranged opposite the air inlet, the filter housing comprising a substantially quadrangular filter seat configured to receive an air filter, wherein the filter seat comprises a first peripheral edge and a second peripheral edge configured to retain the air filter, said first peripheral edge and second peripheral edge being arranged one upstream of the other with respect to a direction of air passing through the filter seat,
wherein the filter housing comprises a filter insertion part which extends from the air inlet towards the filter seat, the filter insertion part comprising a pair of lateral guide elements defining a slot for insertion of the air filter arranged opposite the air inlet.

An air conditioning unit of this type is also known from EP 0744309 A1. DE 102007048396 A1 describes a filter housing configured to receive two air filters.

It is an object of the invention to make available a solution for installing an air filter, possibly consisting of two separate sections, without this requiring the disassembly of parts, in particular of a cover.

This object is achieved according to the invention by an air conditioning unit for a motor vehicle of the type defined above, wherein the lateral guide elements are provided with respective upper edge portions projecting towards one another, at least one of said upper edge portions being joined arc-wise to a lateral part of the first peripheral edge of the filter seat,
wherein the lateral guide elements are provided with respective lower edge portions extending towards each other, said lower edge portions being curved concurrently with the upper edge portions and defining a step with respect to a bottom part of the filter seat.

Therefore, the suggested solution provides for the positioning of the air filter (possibly in two parts) using the air inlet provided in the front part of the air conditioning unit. In the air filter replacement step it is not required to disassemble any cover because it achieved by operating directly inside the air channel; the replacement of the filter may thus occur from the outside of the vehicle itself, without having to perform any disassembly of other parts.

Advantageously, one of said lateral guide elements is arranged in a median position with respect to the width of the air inlet. This arrangement permits the installation of an air filter consisting of two separate sections.

It is a further object of the invention a method for installing an air filter in an air conditioning unit according to the invention, comprising:
- inserting a first end of the air filter into the filter insertion slot, by passing the air filter through the air inlet,
- moving the air filter from the filter insertion part to the filter seat, by pushing the first air filter from a second end thereof opposite the first end,
- continuing to push the air filter until the second end of the air filter is positioned beyond the step of the lower edge portions,
- releasing the second end of the air filter, which positions itself into the filter seat by elastic return.

It is a further object of the invention a method for installing a first air filter and a second air filter in an air conditioning unit according to the invention, comprising:
- inserting a first end of the first air filter into the filter insertion slot, by passing the first air filter through the air inlet,
- moving the first air filter from the filter insertion part to the filter seat, by pushing the first air filter from a second end thereof opposite the first end,
- continuing to push the first air filter until the second end of the first air filter is positioned beyond the step of the lower edge portions,
- releasing the second end of the first air filter, which positions itself into the filter seat by elastic return,
- moving the first air filter transversally beyond the lateral guide element located in the middle of the width of the air inlet, by pushing it from one of its lateral edges,
- inserting a first end of the second air filter into the filter insertion slot, by passing the second air filter through the air inlet,
- moving the second air filter from the filter insertion part to the filter seat, by pushing the first air filter from a second end thereof opposite the first end,
- continuing to push the second air filter until the second end of the second air filter is positioned beyond the step of the lower edge portions,
- releasing the second end of the second air filter, which positions itself, by elastic return, into the filter seat next to the first air filter.

Advantageously, the air filter, or each of said first and second air filters, comprises a pleated filter body and two straight side edges parallel to each other which delimit the filter body in a longitudinal direction.

Further features and advantages of the invention will become more apparent with the following detailed description of an embodiment of the invention, made with reference to the accompanying drawings, provided only by way of non-limiting example, in which:

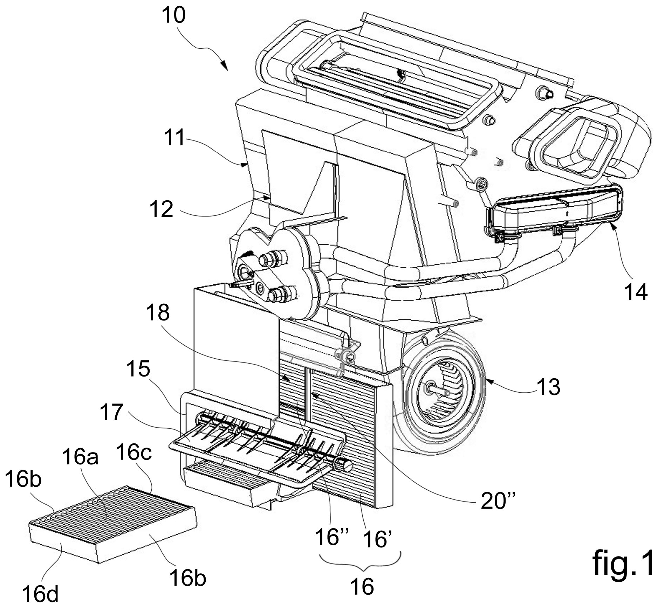

- figure 1 is a perspective section view of an air conditioning unit according to the invention;

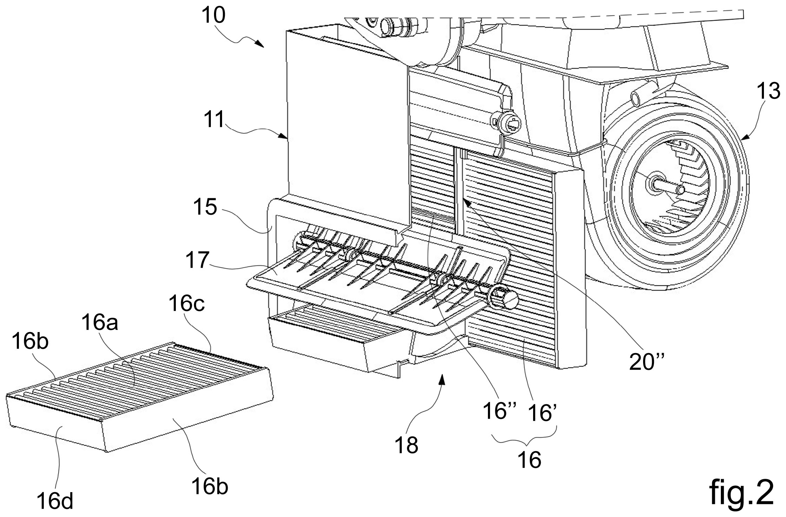

- figure 2 is an enlarged view of a part of figure 1;

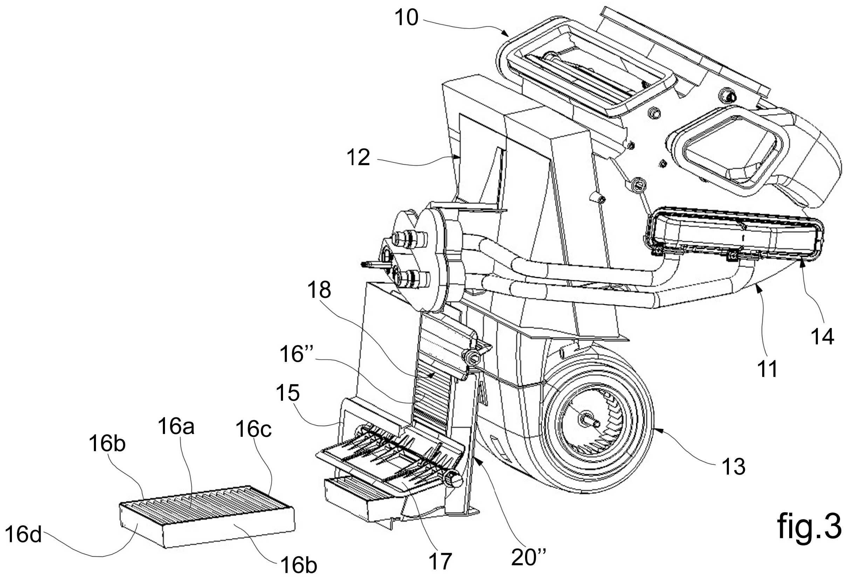

- figure 3 is another perspective section view, in which only one half of the air filter is shown;

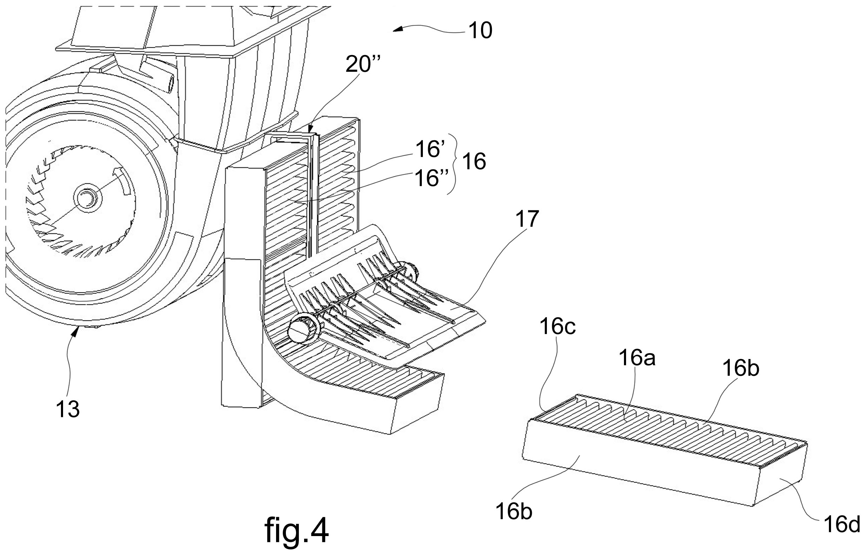

- figure 4 is another perspective section view, which shows the positioning of the air filter;
- figures 5 and 6 are perspective section views, which show different steps of installation of the air filter; and
- figure 7 is a perspective section view, which shows a filter insertion part.

With reference to the figures, an air conditioning unit for a motor vehicle is indicated by reference numeral 10 as a whole. The air conditioning unit comprises a casing 11, a part of which is shown in the figures.

The casing 11 forms a chamber generally articulated into a plurality of air passages and connected to an inlet duct 12 in which a fan is mounted 13. The inlet duct 12 draws external air from an air inlet 15 formed at the front of the casing 11. The term "front" refers to the use condition of the air conditioning unit 10, in which the part of the air conditioning unit 10, in which the air inlet 15 is formed, is facing toward the front part of the vehicle, considered with respect to the direction of advancement of the vehicle itself. A flap 17, which is movable, e.g. rotatable, between an open position (shown in the figures), which allows an air flow to enter through the air inlet 15, and a closed position, which occludes the air inlet 15, may be positioned at the air inlet 15.

A heater 14 for heating an air flow treated by the air conditioning unit, an evaporator (not shown) for treating the air flow, and an air filter 16 are housed in the chamber formed inside the casing 11. The construction of the air conditioning unit and the arrangement of the respective components, with the exception of the air filter 16 and the air inlet 15, are not essential for the purposes of the invention and will not be described further.

In the embodiment, the air filter 16 consists of two separate sections, respectively indicated as 16' and 16", and which hereinafter will be named first air filter and second air filter. However, it is understood that the invention further relates to the case of an air filter formed of a single piece.

Each of the air filters 16', 16" (or the single air filter 16) is a flexible element of approximately parallelepiped shape. In particular, each of the air filters 16', 16" (or the single air filter 16) is of the type comprising a pleated filter body 16a formed, in a known manner, of a web of pleated filter material. Each of the air filters 16', 16" (or the single air filter 16) further comprises two straight lateral edges 16b parallel to one another, which delimit the filtering body 16a in the longitudinal direction. Each lateral edge 16b is formed by a straight strip of fiber-based material, e.g., non-woven fabric or the like, which may be identical to the material of the pleated filter body 16a. In a manner known in itself, the lateral edges 16b are fastened in a permanent manner to the filtering body 16a.

A filter housing 18 configured to receive the air filter 16 (or the air filters 16', 16") is formed in the casing 11 of the air conditioning unit 10. The filter housing 18 is arranged facing the air inlet 15, and comprises a substantially quadrangular filter seat 19, in particular substantially congruent with the single air filter 16, or with the two air filters 16', 16" placed side by side.

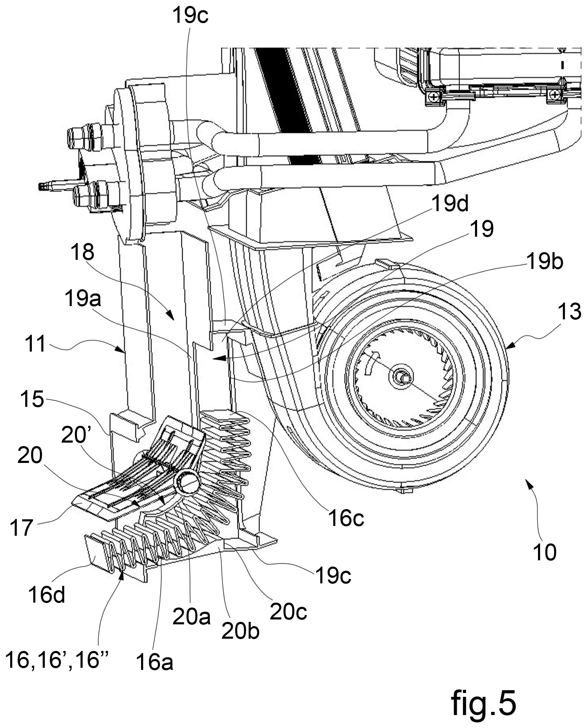

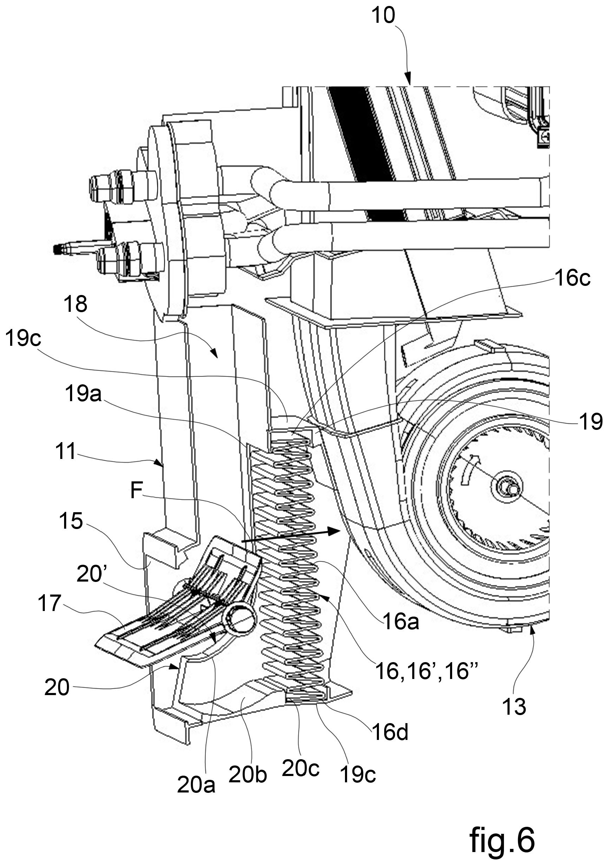

The filter seat 19, shown in figures 5 and 6, comprises a first peripheral edge 19a and a second peripheral edge 19b configured to retain the air filter 16 (or the air filters 16', 16"). The first peripheral edge 19a and the second peripheral edge 19b are arranged upstream of one another with respect to an air passage direction through the filter seat 16, identified by the arrow F in figure 6. In practice, the air passage direction F extends from the air inlet 15 toward the fan 13. The filter seat 19 is delimited between the first peripheral edge 19a and the second peripheral edge 19b in the direction parallel to the air passage direction F. The filter seat 19 is further delimited between two end walls 19c in a direction orthogonal to the air passage direction F. The filter seat 19 is further delimited between two side walls 19d in a direction orthogonal to the two directions mentioned above, and parallel to the width direction of the air inlet 15. Only one of the side walls 19d is visible in figure 5.

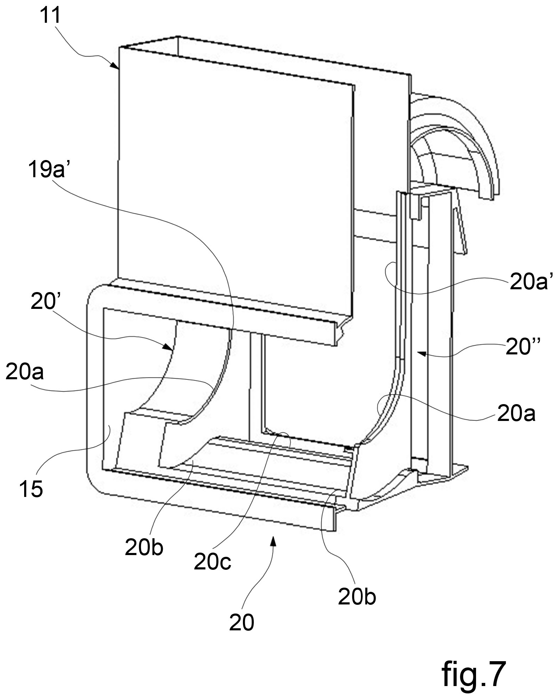

Again with reference to figure 7, the filter housing 18 further comprises a filter insertion part 20, which extends from the air inlet 15 towards the filter seat 19. The filter insertion part 20 comprises a pair of lateral guide elements 20', 20" defining a slot for the insertion of the air filter 16 (or for the insertion of the air filters 16', 16" one after the other) arranged facing the air inlet 15. The lateral guide elements 20', 20" may be separate parts which are assembled to other parts of the housing 11 of the air conditioning unit 10, or be made, in whole or in part, in a single piece with other parts of the casing 11 of the air conditioning unit 10.

The distance between the side guide elements 20', 20" is substantially equal to the width of the single air filter 16, 16', 16". In the illustrated example, one of the lateral guide elements 20', 20" is arranged, with respect to the width direction of the air inlet 15, at one end of the air inlet 15, while the other of the lateral guide elements 20', 20" is arranged at a middle position.

With reference in particular to figures 5 and 6, the lateral guide elements 20', 20" are provided with respective upper edge portions 20a projecting toward each other. At least one of such upper edge portions 20a is joined arc-wise to a side part of the first peripheral edge 19a of the filter seat 19. In the illustrated embodiment, it is the upper edge portion 20a of the side guide element 20' which is joined arc-wise to a lateral part 19a' of the first peripheral edge 19a of the filter seat 19, as can be seen in figures 5 and 6. In the other side guide element 20", the upper edge portion 20a is curved and extends to define a seat edge portion 20a' parallel to the side part 19a' of the first peripheral edge 19a of the filter seat 19.

The lateral guide elements 20', 20" are further provided with respective lower edge portions 20b extending towards each other. The lower edge portions 20b are curved concurrently with the upper edge portions 20a and define a step 20c with respect to the terminal bottom wall 19c of the filter seat 19. In the illustrated example, the lower edge portions 20b of the side guide elements 20', 20" are joined to one another, defining a single bottom portion of the filter insertion part 20.

A method for installing an air filter 16, 16', 16" in the air conditioning unit described above is now described.

Initially, a first end 16c of the air filter 16, 16', 16" is inserted into the filter insertion slot defined by the side guide elements 20', 20", passing the air filter 16, 16', 16" through the air inlet 15.

Then the air filter 16, 16', 16" is moved from the filter insertion part 20 to the filter seat 19, pushing it from its second end 16d opposite the first end 16. The movement is facilitated by the fact that the upper edge portions 20a of the side guide elements 20', 20" are curved and joined to edge portions 19a, 20a' of the filter seat 19.

If the air filter 16, 16', 16" is continued to be pushed, the first end 16c of the air filter 16, 16', 16" abuts against the top end wall 19c of the filter seat 19, and thus a further thrust applied to the air filter 16, 16', 16" determines its compression against the top end wall 19c of the filter seat 19, until the second end 16d of the air filter 16, 16', 16" is positioned beyond the step 20c of the lower edge portions 20b of the side guide elements 20', 20".

If the second end 16d of the air filter 16, 16', 16" is now released, the air filter 16, 16', 16" expands by elastic return toward its non-stressed condition, positioning itself in the filter seat 19 toward the bottom terminal part 19c of the filter seat 19.

If the filter housing 18 is dimensioned for the use of a single air filter, the installation method is concluded with the operation just described. If the housing 18 is dimensioned for the use of two air filters arranged beside one another, as in the example shown in the figures, it is provided to transversely move the first air filter 16' just inserted beyond the side guide element 20" arranged in a median position with respect to the width of the air inlet 15, by pushing it from one of its side edges 16b. This displacement is facilitated by the guiding action applied by the first peripheral edge 19a and by the second peripheral edge 19b of the filter seat 19.

Once the first air filter 16' has been moved, the installation sequence described above is repeated for the second air filter 16", so as to position the second air filter 16" in the filter seat adjacent to the first air filter 16'.

## Claims

1. An air conditioning unit for a motor vehicle, comprising
a casing (11) of the air conditioning unit,
an air inlet (15) formed in said casing (11), said air inlet being arranged in use frontally on said casing (11) and being configured for outside air to enter into the casing (11) of the air conditioning unit, and
a filter housing (18) formed in said casing (11) and arranged opposite the air inlet (15), the filter housing (18) comprising a substantially quadrangular filter seat (19) configured to receive an air filter (16, 16', 16''), wherein the filter seat (19) comprises a first peripheral edge (19a) and a second peripheral edge (19b) configured to retain the air filter (16, 16', 16"), said first peripheral edge (19a) and second peripheral edge (19b) being arranged one upstream of the other with respect to a direction (F) of air passing through the filter seat (19),
wherein the filter housing (18) comprises a filter insertion part (20), which extends from the air inlet (15) towards the filter seat (19), said filter insertion part (20) comprising a pair of lateral guide elements (20', 20") defining a slot for insertion of the air filter (16, 16', 16") arranged opposite the air inlet (15),
**characterized in that** the lateral guide elements (20', 20") are provided with respective upper edge portions (20a) projecting towards each other, at least one of said upper edge portions (20a) being arc-wise connected to a side part (19a') of the first peripheral edge (19a) of the filter seat (19),
wherein the lateral guide elements (20', 20") are provided with respective lower edge portions (20b) extending towards each other, said lower edge portions (20b) being curved concurrently with the upper edge portions (20a) and defining a step (20c) with respect to a bottom part (19c) of the filter seat (19).

2. An air conditioning unit according to claim 1, wherein one of said lateral guide elements (20', 20") is arranged in a middle position with respect to the width of the air inlet (15), and wherein the filter seat (19) is configured to receive a first air filter (16') and a second air filter (16").

3. A method for installing an air filter (16, 16', 16") in an air conditioning unit according to claim 1, comprising:
- inserting a first end (16c) of the air filter (16, 16', 16") into the filter insertion slot, by passing the air filter (16, 16', 16") through the air inlet (15),
- moving the air filter (16, 16', 16") from the filter insertion part (20) to the filter seat (19), by pushing the air filter from a second end (16d) thereof opposite the first end (16c),
- continuing to push the air filter (16, 16', 16") until the second end (16d) of the air filter (16, 16', 16") is positioned beyond the step (20c) of the lower edge portions (20b),
- releasing the second end (16d) of the air filter (16, 16', 16"), which positions itself into the filter seat (19) by elastic return.

4. A method for installing a first air filter (16') and a second air filter (16") in an air conditioning unit according to claim 2, comprising:
- inserting a first end (16c) of the first air filter (16') into the filter insertion slot, by passing the first air filter (16') through the air inlet (15),
- moving the first air filter (16') from the filter insertion part (20) to the filter seat (19), by pushing the first air filter from a second end (16d) thereof opposite the first end (16c),
- continuing to push the first air filter (16') until the second end (16d) of the first air filter (16') is positioned beyond the step (20c) of the lower edge portions (20b),
- releasing the second end (16d) of the first air filter (16'), which positions itself into the filter seat (19) by elastic return,
- moving the first air filter (16') transversally beyond the lateral guide element (20") located in the middle of the width of the air inlet (15), by pushing the first air filter from one of its lateral edges (16b),
- inserting a first end (16c) of the second air filter (16") into the filter insertion slot, by passing the second air filter (16") through the air inlet (15),
- moving the second air filter (16") from the filter insertion part (20) to the filter seat (19), by pushing the second air filter from a second end (16d) thereof opposite the first end (16c),
- continuing to push the second air filter (16") until the second end (16d) of the second air filter (16") is positioned beyond the step (20c) of the lower edge portions (20b),
- releasing the second end (16d) of the second air filter (16"), which positions itself, by elastic return, into the filter seat (19) next to the first air filter (16').

5. A method according to claim 3 or 4, wherein the air filter (10), or each of said first and second air filters, comprises a pleated filter body (16) and two straight side edges (18) parallel to each other which delimit the filter body (16) in a longitudinal direction.
